# EUROPÄISCHE PATENTANMELDUNG

(11) **EP 2 392 207 A1**
(43) Veröffentlichungstag der Anmeldung: **07.12.2011**
(21) Anmeldenummer: 11167389.3
(22) Anmeldetag: 25.05.2011
(51) Int. Cl.: A01G 27/00

(54) **Pflanzgefäß**

(30) Priorität: 02.06.2010 DE 102010017214
(71) Anmelder: technoplant Kunststofftechnik GmbH, 49685 Emstek (DE)
(72) Erfinder:
(74) Vertreter: Müller, Enno

(57) **Zusammenfassung**

Die Erfindung betrifft ein Pflanzgefäß (1), insbesondere in Form eines Blumenkastens, mit einem Boden, einem Zwischenboden (7) und einem Füllstandsanzeiger (9). Um ein vorteilhaft stapelbares Pflanzbehältnis mit darin befindlichem Füllstandsanzeiger anzugeben, wird vorgeschlagen, dass der Füllstandsanzeiger (9) aufstellbar mit dem Zwischenboden (7) verbunden ist.

## Beschreibung

Die Erfindung betrifft ein Pflanzgefäß, insbesondere in Form eines Blumenkastens, mit einem Boden, mit einem Zwischenboden und einem Füllstandsanzeiger.

Derartige Pflanzgefäße sind bereits in verschiedener Hinsicht bekannt geworden. Es wird beispielsweise auf die DE 42 01118 A1 und die EP 0 852 110 B1 verwiesen. Bei dem aus der erstgenannten Druckschrift bekannten Pflanzgefäß ist eine Wasserfüllstandsanzeige feststehend, sich senkrecht vom Boden des Pflanzbehälters erstreckend, vorgesehen. Zur Stapelbarkeit ist daher in einem anderen Bereich desselben Pflanzbehälters eine entsprechende Ausstülpung des Bodens nach oben vorgesehen, damit die Pflanzbehältnisse jeweils um 180° gedreht übereinander vergleichsweise raumsparend stapelbar sind.

Ausgehend hiervon beschäftigt sich die Erfindung mit der Aufgabenstellung, ein vorteilhaft stapelbares Pflanzbehältnis mit darin befindlichem Füllstandsanzeiger anzugeben.

Eine mögliche Lösung der Aufgabe ist nach einem ersten Erfindungsgedanken bei einem Pflanzgefäß gegeben, bei welchem der Füllstandsanzeiger aufstellbar mit dem Zwischenboden verbunden ist. Der Füllstandsanzeiger wird herstellungsmäßig im Pflanzbehältnis nicht feststehend, im Nutzungszustand sich vertikal erstreckend, ausgebildet. Vielmehr wird der Füllstandsanzeiger zunächst in einer der Nutzungsstellung nicht entsprechenden Stellung vorgesehen und aus dieser Stellung aufstellbar in die Nutzungsstellung ausgebildet. Hierbei ist er mit dem Zwischenboden verbunden. Der Füllstandsanzeiger kann so zuverlässig von einem Nutzer des Pflanzgefäßes bei einem Erstgebrauch vorgefunden werden.

Ein Pflanzgefäß, wie es hier angesprochen ist, kann beispielsweise ein Balkonkasten sein. Es kann sich aber auch um einen sonstigen Blumentopf, beispielsweise auch für Hydrokulturen, handeln. Bevorzugt ist ein derartiges Pflanzgefäß als Kunststoffteil, insbesondere Kunststoffspritzteil, ausgebildet.

Weitere Merkmale der Erfindung sind nachstehend, auch in der Figurenbezeichnung und der Zeichnung, oftmals in ihrer bevorzugten Zuordnung zu dem bereits erläuterten Anspruchskonzept beschrieben bzw. dargestellt, sie können aber auch in einer Zuordnung zu nur einem oder mehreren einzelnen Merkmalen, die hier beschrieben oder zeichnerisch dargestellt sind, oder unabhängig oder in einem Gesamtkonzept von Bedeutung sein.

Bevorzugt ist zunächst, dass im Zuge des Aufstellens des Füllstandsanzeigers zumindest ein Teilbereich des Füllstandsanzeigers, geeigneterweise der Fußbereich, sich relativ zu dem Zwischenboden absenkt, um beispielsweise zu erreichen, dass der Füllstand im Nutzungszustand bis hin in einen bodennahen Bereich messbar ist. Vorzugsweise ist der Füllstandsanzeiger, der weiter bevorzugt langgestreckt ausgeführt ist, um eine Schwenkachse, die sich vorzugsweise quer zu der Längsachse A erstreckt, zum Aufstellen verschwenkbar. Hierbei kann weiter bevorzugt vorgesehen sein, dass der Füllstandsanzeiger mit einem im aufgestellten Zustand den Boden des Pflanzgefäßes zugeordneten Fußbereich überkragend bezüglich der Schwenkachse angeordnet ist. So senkt sich der Fußbereich im Zuge des Aufstellens zum Boden ab, bzw. befindet sich im aufgestellten Zustand unterhalb des Zwischenbodens.

Weiter ist bevorzugt, dass der Zwischenboden ein Hochschwenkteil aufweist und dass der Füllstandsanzeiger mit dem Hochschwenkteil verbunden ist. Grundsätzlich kann der Füllstandsanzeiger auch selbst das Hochschwenkteil des Zwischenbodens bilden. Bevorzugt ist jedoch die genannte Ausführung, dass der Füllstandsanzeiger ein gesondertes Teil ist, das seinerseits mit dem Hochschwenkteil verbunden ist. Das Hochschwenkteil ist hierbei weiter bevorzugt zusätzlich zu dem Zwischenboden ausgebildet, also beispielsweise aufliegend auf dem Zwischenboden. Es kann grundsätzlich als Flachteil ausgebildet sein.

Eine weitere bevorzugte Ausführungsform der Erfindung betrifft die Verbindung zwischen dem Füllstandsanzeiger und dem Hochschwenkteil. Diese Verbindung ist bevorzugt derart vorgesehen, dass der Füllstandsanzeiger relativ beweglich zu dem Hochschwenkteil mit dem Hochschwenkteil verbunden ist. Das Hochschwenkteil trägt so einerseits den Füllstandsanzeiger, lässt den Füllstandsanzeiger aber andererseits sich auch relativ zu dem Hochschwenkteil bewegen.

Weiterhin ist bevorzugt, dass der Füllstandsanzeiger mit dem Hochschwenkteil in einer Richtung quer zu der Schwenkachse des Hochschwenkteils beweglich verbunden ist. Im Zuge des Hochschwenkens des Hochschwenkteils kann der Füllstandsanzeiger aus einer beispielsweise Horizontalen in eine beispielsweise vertikale Lage verbracht werden.

Besonders bevorzugt ist weiterhin, dass der Füllstandsanzeiger im nicht hochgeschwenkten Zustand hinsichtlich seines (späteren) Fußbereiches mit Abstand zu der Schwenkachse angeordnet ist. Bei dieser Ausführungsform ist der Füllstandsanzeiger insgesamt mit Abstand zu der Schwenkachse angeordnet.

Der Füllstandsanzeiger kann insbesondere als Hohlkörper, bevorzugt langgestreckter Hohlkörper, ausgebildet sein, in dem sich weiter bevorzugt ein Füllstandsmesselement befindet. Das Füllstandsmesselement kann als Schwimmer ausgebildet sein, der im Nutzungszustand abhängig von dem Wasserspiegel sich relativ zu dem Hohlkörper bewegt. Ein nach oben überstehender Bereich des Schwimmkörpers kann dann als Indikator für den Wasserspiegel genutzt sein.

Weiterhin ist auch bevorzugt, dass der Füllstandsanzeiger insgesamt relativ beweglich zu dem Hochschwenkteil angeordnet ist. Der Füllstandsanzeiger kann somit als zusammenhängendes Festteil - ungeachtet eines gegebenenfalls darin oder daran beweglich aufgenommenen Füllstandsmesselementes - ausgebildet sein, das dann im Zuge des Hochschwenkens oder Aufstellens, wenn etwa der Füllstandsanzeiger selbst das Hochschwenkteil darstellt, sich relativ zu dem Zwischenboden bewegt.

Weiterhin ist bevorzugt, dass die Absenkung des Füllstandsanzeigers oder zumindest eines Fußbereiches des Füllstandsanzeigers zufolge Schwerkraft erfolgt. Allein durch das Aufstellen wird zufolge der Schwerkraft dann die Absenkung initiiert.

Weiterhin ist bevorzugt, dass das Hochschwenkteil zugleich einen Einfüllbereich bildet. Einerseits kann das Hochschwenkteil hierzu seinerseits als Hohlkörper ausgebildet sein, der dann im hochgeschwenkten Zustand ein Einfüllrohr oder dergleichen bildet. Andererseits kann das Hochschwenkteil aber auch so an eine Wandung des Pflanzgefäßes im hochgeschwenkten Zustand angepasst sein, dass eine Absperrung eines Telbereichs des Pflanzgefäßes hiermit erfolgt und in Zusammenwirkung von Hochschwenkteil und Wandung dann der Einfüllbereich gebildet ist.

Weiter ist bevorzugt, dass der Füllstandsanzeiger im aufgestellten Zustand innerhalb des Einfüllbereichs angeordnet ist. Hierdurch kann sich sogar der Vorteil ergeben, dass im Zuge von Einfüllen von Wasser noch zusätzlich im Hinblick auf eine Bewegung nach unten auf den Füllstandsanzeiger eingewirkt werden kann.

Hinsichtlich des nicht aufgestellten Zustands ist bevorzugt, dass der Füllstandsanzeiger sich zumindest teilweise unterhalb einer umgebenden Außenfläche des Zwischenbodens befindet. Jedenfalls außerhalb des Füllstandsanzeigers ist bevorzugt, dass der Zwischenboden ebenflächig, etwa sich parallel erstreckend zu dem Boden des Pflanzgefäßes, erstreckt. Diese hierdurch gebildete, die Außenfläche darstellende Ebene, ist entsprechend bevorzugt von dem Füllstandsanzeiger im nicht aufgestellten Zustand durchsetzt. Weiter bevorzugt liegt der Füllstandsanzeiger im nicht aufgestellten Zustand praktisch unterhalb oder in seinem oberen Bereich abschließend mit der Außenfläche oder auch leicht überstehend in dem Hochschwenkteil bzw. dem Zwischenboden ein. Die Außenfläche kann gegebenenfalls auch uneben ausgebildet sein. Die Außenfläche ist in der Regel die Aufnahmefläche für Blumenerde.

Weiterhin ist bevorzugt, dass der Füllstandsanzeiger in einer in dem Hochschwenkteil und/oder dem Zwischenboden ausgebildeten Aufnahme einliegt. Die Aufnahme ist bevorzugt auch jedenfalls in dem Sinne geschlossen ausgebildet, dass sich nach dem Hochschwenken des Hochschwenkteils bzw. einem Aufstellen des Füllstandsanzeigers eine Rinne ergibt, die ein Durchfallen von beispielsweise Blumenerde hindert. Auch soll möglichst kein Wasser, beispielsweise bei relativ hohem Wasserstand, in die Rinne einlaufen.

Nachstehend ist die Erfindung weiter anhand der beigefügten Zeichnung erläutert, die aber lediglich ein Ausführungsbeispiel darstellt. Hierbei zeigt
- Fig. 1: eine perspektivische Gesamtansicht eines als Balkonkasten ausgebildeten Pflanzgefäßes mit darin befindlichem Füllstandsanzeiger, im nicht aufgestellten Zustand;
- Fig. 2: den Gegenstand der Fig. 1 in einer Draufsicht;
- Fig. 3: einen Querschnitt durch den Gegenstand gemäß Fig. 1 bzw. Fig. 2, geschnitten entlang der Linie III-III;
- Fig. 4: eine Darstellung gemäß Fig. 3 bezüglich zwei ineinander gestapelten Pflanzgefäßen;
- Fig. 5: eine Einzeldarstellung des Zwischenbodens;
- Fig. 6: eine Herausvergrößerung des Ausschnitts VI-VI aus Fig. 5;
- Fig. 7: eine Darstellung gemäß Fig. 5 bzw. Fig. 6, mit hochgeschwenktem Hochschwenkteil;
- Fig. 8: eine Darstellung gemäß Fig. 1, mit hochgeschwenktem Hochschwenkteil;
- Fig. 9: eine Darstellung gemäß Fig. 3, bei aufgestelltem Füllstandsanzeiger; und
- Fig.10: eine Darstellung gemäß Fig. 9, bei einem hohen Wasserfüllstand.

Dargestellt und beschrieben ist ein als Balkonkasten ausgebildetes Pflanzgefäß 1, das zwei Seitenwände 2, 3 und hier nahezu halbkreisförmig im Grundriss die Seitenwände 2, 3 verbindende Stirnwände 4, 5 aufweist. Das Pflanzgefäß 1 ist insgesamt langgestreckt, mit einer Längsachse, ausgebildet. Eine Länge L kann beispielsweise dem Zwei- bis Zehnfachen der Breite B entsprechen.

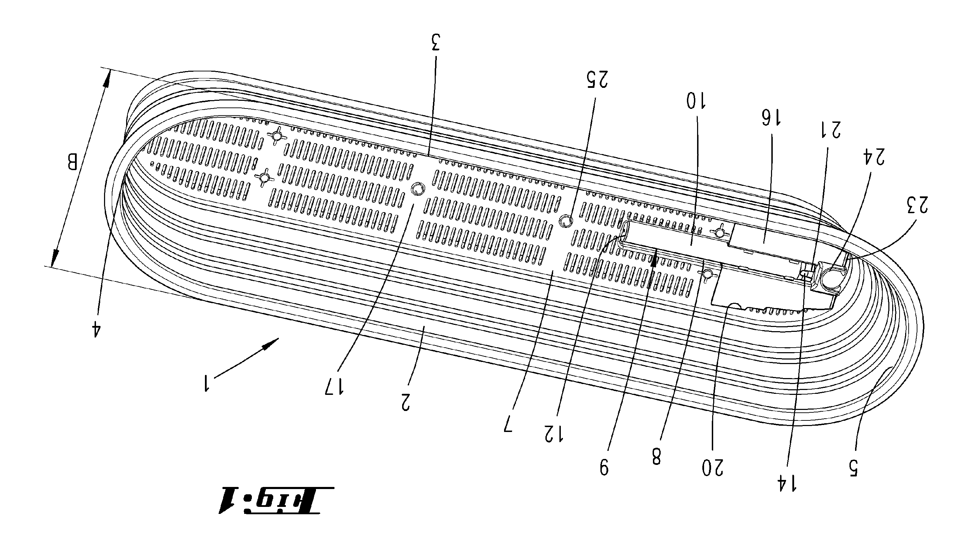

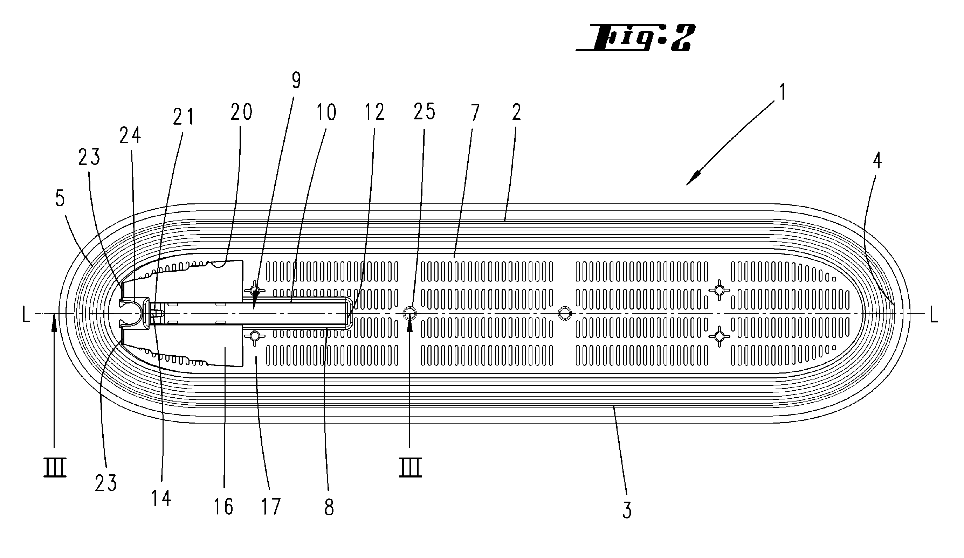

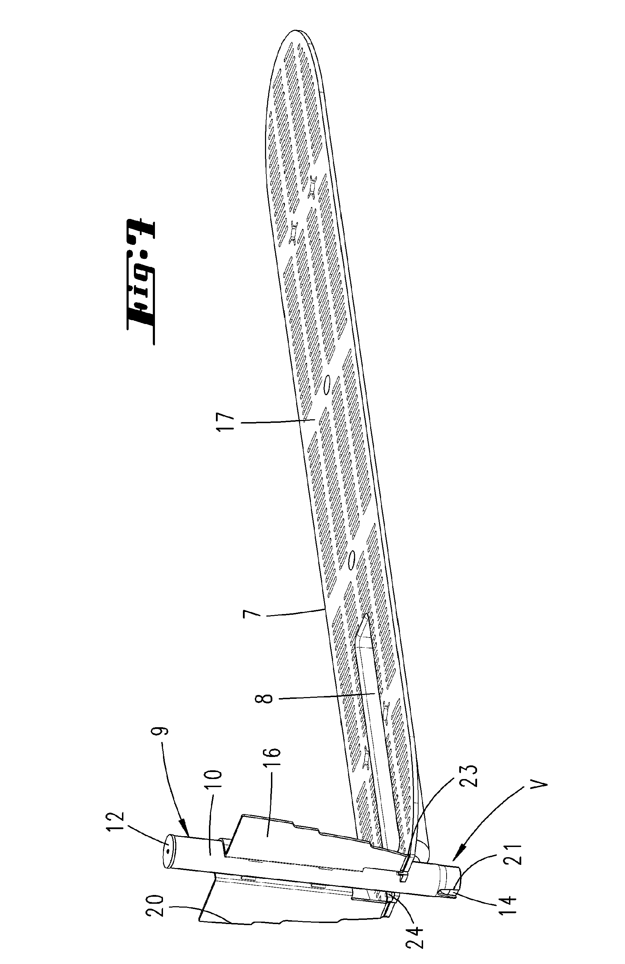

Wie es sich zunächst aus den Figuren 1 und 2 ergibt, weist das Pflanzgefäß einen Füllstandsanzeiger 9 auf, der aus einer liegenden Stellung etwa gemäß den Figuren 1 bis 4 in eine aufgestellte Stellung gemäß den Figuren 7 bis 10 versetzbar ist.

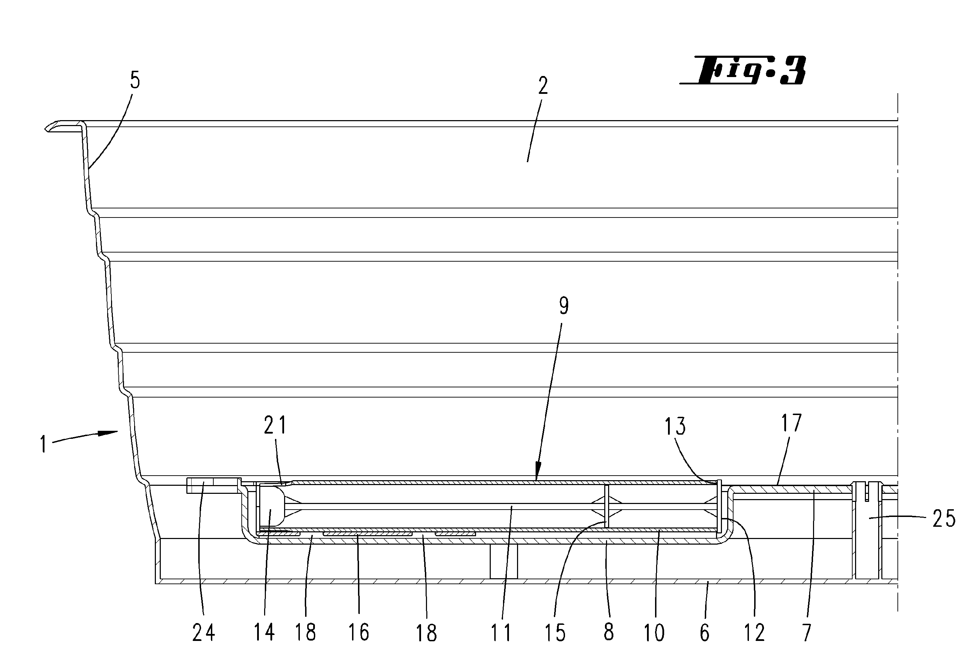

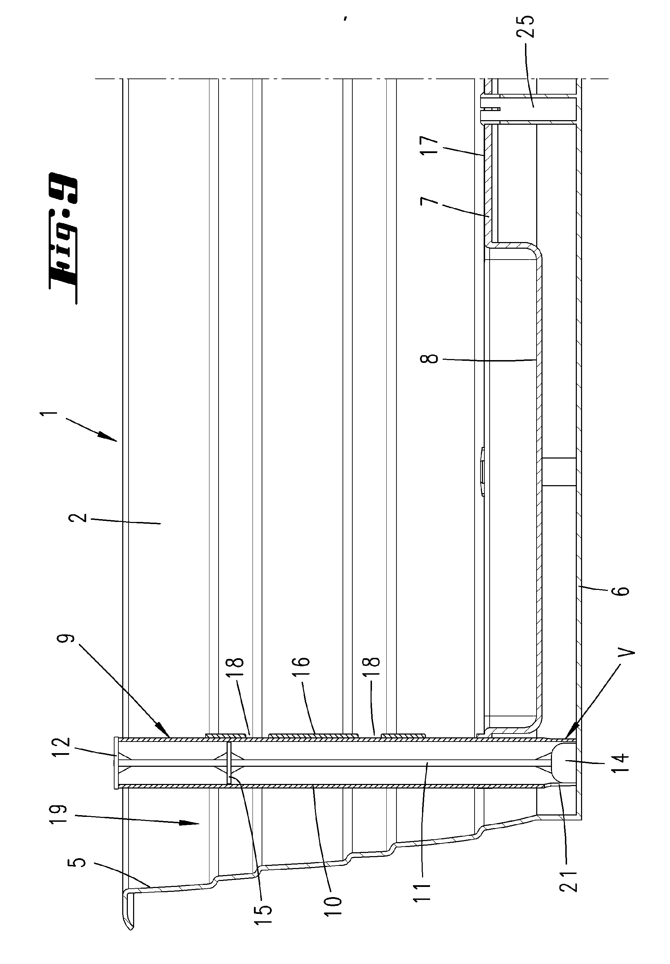

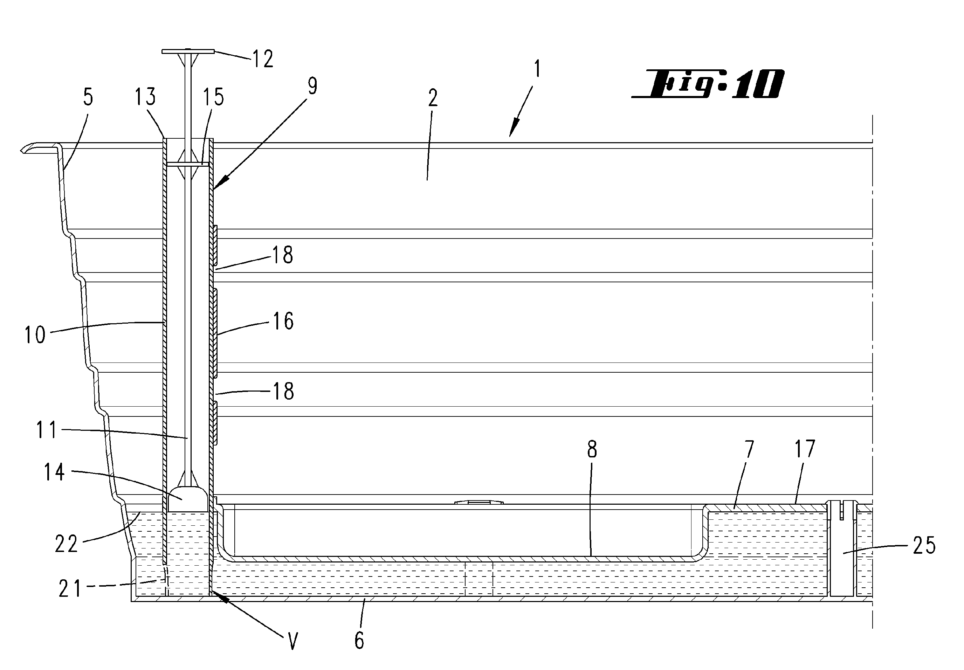

Der Füllstandsanzeiger 9 besteht im Einzelnen aus einem Aufnahmerohr 10, vergleiche Fig. 7, in welchem ein Schwimmer 11, vergleiche etwa Fig. 3, angeordnet ist. Der Schwimmer 11 weist einseitig, an der späteren Oberseite, eine Abschlussplatte 12 auf. Die Abschlussplatte 12 liegt bevorzugt in der untersten Stellung des Schwimmers auf einem Stirnrand 13 des Rohres 10 auf. Anderendig des Schwimmers 11, aufgenommen in dem Rohr 10, ist beim Ausführungsbeispiel ein Schwimmerteil in Form einer Glocke 14 ausgebildet. Es kann sich auch um ein vollkommen abgeschlossenes Luftvolumen handeln. Auf Grund in der Glocke 14 nach dem Aufschwenken befindlicher Luft schwimmt der Schwimmer 11 beim Einfüllen von Wasser, wie dies etwa im Vergleich der Figuren 9 und 10 zu erkennen ist, auf dem Wasser auf, so dass der Schwimmer und damit die Abschlussplatte 12 sich nach oben bewegt und ein entsprechender Überstand ein Indikator für die Menge des eingefüllten Wassers ist. Zwischen der Abschlussplatte 12 und der Glocke 14 ist über die Länge des Schwimmers 11 noch ein Abstandselement 15 angeordnet. Hierdurch ist ein verkippungsfreies Bewegen des Schwimmers in dem Rohr 10 ermöglicht.

Der Füllstandsanzeiger 9 liegt in einer Aufnahme 8 ein, die teilweise in dem Zwischenboden 7 und teilweise in einem in der Stellung gemäß den Figuren 1 bis 6 in dem auf dem Zwischenboden aufliegenden Hochschwenkteil 16 ausgebildet ist. Sowohl der Zwischenboden 8, als auch das Hochschwenkteil 16 besitzen hierzu eine rinnenförmige Einbuchtung nach unten. Die Einbuchtungen des Hochschwenkteils 16 und des Zwischenbodens 7 sind in der Stellung beispielsweise der Fig. 3 ineinandergeschachtelt.

Bezüglich des Zwischenbodens 8 ist die rinnenförmige Einbuchtung unterhalb einer umgebenden Zwischenboden-Oberfläche 17 wannenförmig geschlossen ausgebildet.

Bei dem Hochschwenkteil 16 sind dagegen in dem Rinnenbereich Durchbrechungen 18 ausgebildet. Zudem sind die Stirnseiten des Rinnenbereichs des Hochschwenkteils 16 nicht hochgezogen wie in dem Rinnenbereich des Zwischenbodens. Die Durchbrechungen 18 sind im Wesentlichen wiederum durch den Füllstandsanzeiger bzw. das Rohr 9 überdeckt, und zwar sowohl im Ausgangszustand gemäß den Figuren 1 bis 6 wie auch im hochgeklappten Zustand des Hochschwenkteils 16 und abgesenktem Füllstandsanzeiger 9.

Der Füllstandsanzeiger 9 ist aufstellbar, von einer Stellung beispielsweise gemäß Fig. 3, in eine Stellung beispielsweise gemäß Fig. 7 mit dem Zwischenboden 7 verbunden. Beim Ausführungsbeispiel ist die Verbindung durch das Hochschwenkteil 16 gegeben, das seinerseits mit dem Zwischenboden 7 verbunden ist.

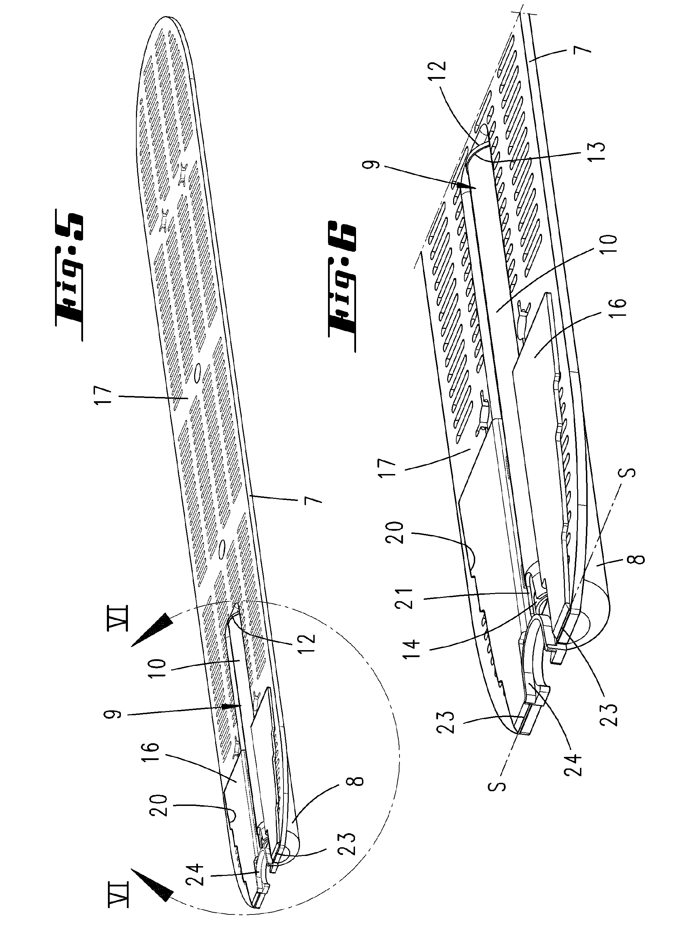

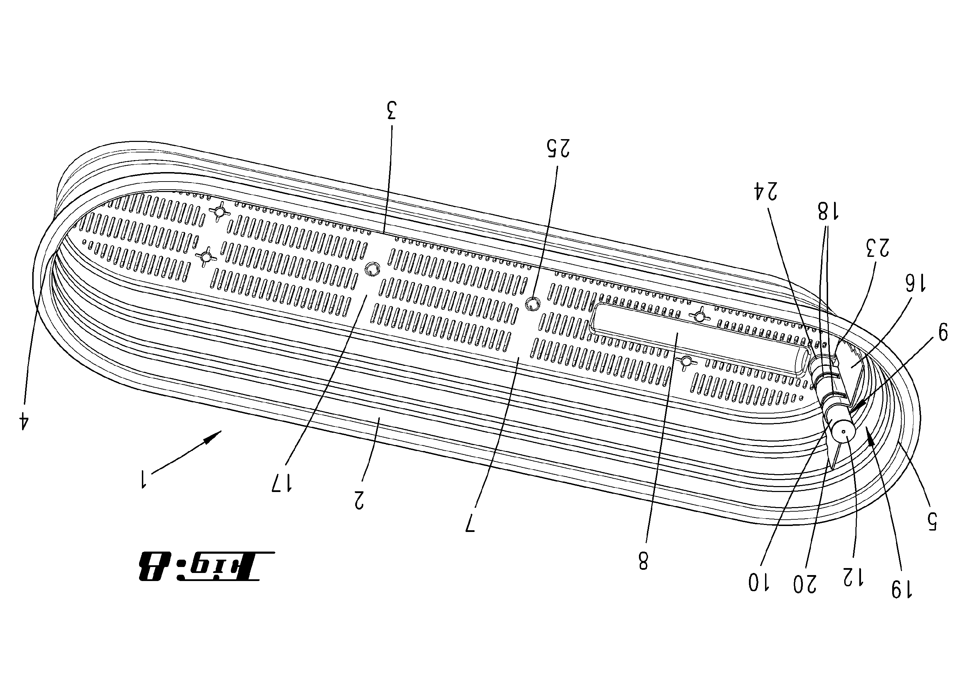

Im Zuge eines von Hand durch den Benutzer bei erstmaliger Benutzung durchzuführenden Hochklappens des Hochschwenkteils 16, aus der Stellung gemäß Fig. 5 bzw. 6 in die Stellung gemäß Fig. 7 bzw. Fig. 8, legt sich das Hochschwenkteil 16 mit seinen den Wandungen 2 bzw. 3 bzw. 5 zugeordneten Randbereichen an diese Wandungen an, so dass sich eine, jedenfalls für Blumenerde, im Wesentlichen geschlossene Abteilung ergibt. Diese Abteilung 19, siehe Figuren 8 und 9 beispielsweise, dient dann als Wassereinfüllbereich bei einer Nutzung des Pflanzgefäßes.

Der Füllstandsanzeiger 9 ist an dem Hochschwenkteil 16 gehaltert, und zwar bevorzugt und beim Ausführungsbeispiel durch Rastvorsprünge, die durch Eindrücken in den Rinnenbereich überlaufbar sind. Die Halterung ermöglicht eine Bewegung in der Rinne jedenfalls nach unten, wenn das Hochschwenkteil in die senkrechte Stellung versenkt wird. Die Rastvorsprünge sind bevorzugt in einem Überdeckungsbereich zu einer oder mehreren der Durchbrechungen 10 ausgebildet.

Im Zuge des Hochschwenkens des Hochschwenkteils 16 bewegt sich der Füllstandsanzeiger 9 zufolge der Schwerkraft nach unten in die in Fig. 8 bzw. 9 gezeigte Stellung. Der Füllstandsanzeiger 9 senkt sich hierdurch insgesamt relativ zu dem Zwischenboden 7 ab. Das Rohr 10 weist unterseitig eine Ausnehmung 21 auf, durch welche man Wasser in das Rohr einbringen kann. Beim Einfüllen von Wasser in das Pflanzgefäß, wie es in Fig.10 dargestellt ist, steigt entsprechend dann ein Wasserspiegel 22, ausgehend von dem Boden 6, an, woraufhin sich der Schwimmer aus der Stellung gemäß Fig. 9 in die Stellung gemäß Fig. 10 bewegt und hierfür eine Anzeige liefert. In der Regel wird das Wasser nur so weit eingegossen, dass der Wasserspiegel maximal mit der Fläche 17 des Zwischenbodens 7 abschließt. Der Einfüllbereich 19 ist daher bei Benutzung in der Regel wasserfrei.

Der Zwischenboden selbst kann gesondert von dem die Wandungen 2, 3 und 4, 5, sowie den Boden 6 aufweisenden Pflanzgefäß hergestellt werden und dann eingelegt werden. Er ist dann an vom Boden 9 aufragenden Zapfen 25 beispielsweise gehaltert. Das Hochschwenkteil 16 kann einstückig mit dem Zwischenboden 7 ausgebildet sein. Es kann hierzu beispielsweise über ein Filmscharnier 23 mit dem Zwischenboden 7 verbunden sein. Beim Ausführungsbeispiel ist eine Schwenkachse S des Hochschwenkteils 16 zugleich durch die Filmscharniere 23 gebildet.

Das Rohr 10 kann weiter fußbereichsseitig eine Verjüngung V, jedenfalls hinsichtlich seines Außendurchmessers aufweisen. Hiermit ist beim Hochschwenken ein günstiges Einfahren in die bevorzugt an dem Zwischenboden ausgebildete, nicht mit dem Schwenkteil 16 verbundene Führung 24 erreicht. Die Führung 24 ist auch überstehend zu einem Tiefstbereich der Rinne ausgebildet. Beim Hochschwenken wird der Füllstandsanzeiger entsprechend hierüber gehoben.

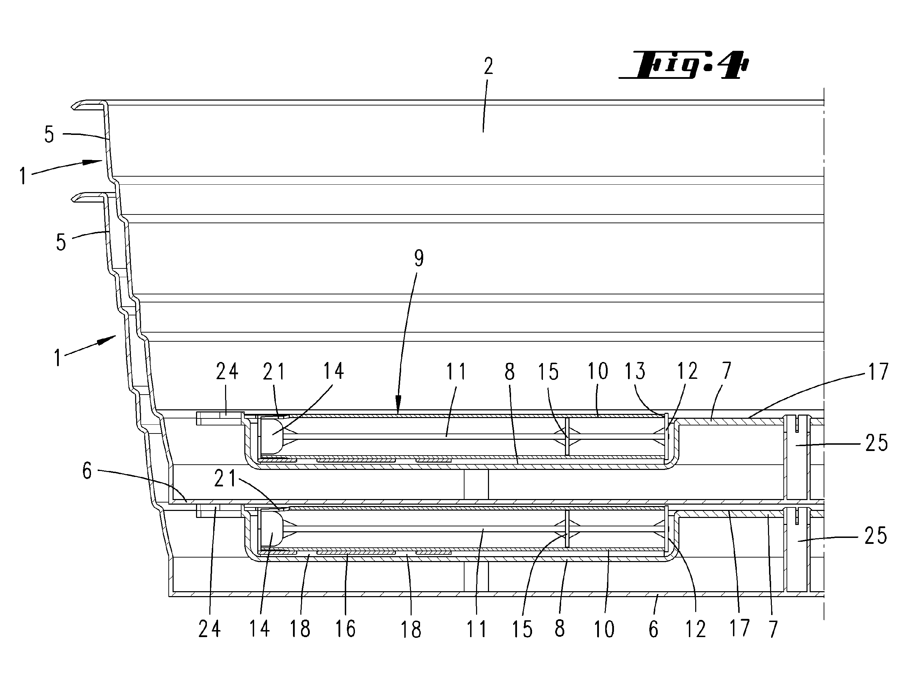

Ein Pflanzgefäß mit einem hochschwenkbar angeordneten Füllstandsanzeiger kann günstig mit anderen derartigen Pflanzgefäßen in einem Stapel zusammengefasst werden, wie dies in Fig. 4 dargestellt ist. Der Boden 6 eines oberen Pflanzgefäßes sitzt praktisch auf dem Zwischenboden 7 im Stapelzustand auf.

Alle offenbarten Merkmale sind (für sich) erfindungswesentlich. In die Offenbarung der Anmeldung wird hiermit auch der Offenbarungsinhalt der zugehörigen/beigefügten Prioritätsunterlagen (Abschrift der Voranmeldung) vollinhaltlich mit einbezogen, auch zu dem Zweck, Merkmale dieser Unterlagen in Ansprüche vorliegender Anmeldung mit aufzunehmen. Die Unteransprüche charakterisieren in ihrer fakultativ nebengeordneten Fassung eigenständige erfinderische Weiterbildung des Standes der Technik, insbesondere um auf Basis dieser Ansprüche Teilanmeldungen vorzunehmen.

### Bezugszeichenliste

- 1: Pflanzgefäß
- 2: Seitenwand
- 3: Seitenwand
- 4: Stirnwand
- 5: Stirnwand
- 6: Boden
- 7: Zwischenboden
- 8: Aufnahme
- 9: Füllstandsanzeiger
- 10: Aufnahmerohr
- 11: Schwimmer
- 12: Abschlussplatte
- 13: Stirnrand
- 14: Glocke
- 15: Abstandselement
- 16: Hochschwenkteil
- 17: Zwischenboden-Oberfläche
- 18: Durchbrechungen
- 19: Abteilung, Einfüllbereich
- 20: Randbereich
- 21: Ausnehmung des Rohres 10
- 22: Wasserspiegel
- 23: Filmscharnier
- 24: Führung
- 25: Zapfen
- L: Längsachse
- B: Breite
- V: Verjüngung
- S: Schenkachse

## Patentansprüche

1. Pflanzgefäß (1), insbesondere in Form eines Blumenkastens, mit einem Boden, einem Zwischenboden (7) und einem Füllstandsanzeiger (9), **dadurch gekennzeichnet, dass** der Füllstandsanzeiger (9) aufstellbar mit dem Zwischenboden (7) verbunden ist.

2. Pflanzgefäß nach Anspruch 1 oder insbesondere danach, **dadurch gekennzeichnet, dass** im Zuge des Aufstellens des Füllstandsanzeigers (9) ein Fußbereich des Füllstandsanzeigers (9) sich absenkt.

3. Pflanzgefäß nach einem oder mehreren der vorhergehenden Ansprüche oder insbesondere danach, **dadurch gekennzeichnet, dass** der Zwischenboden (7) ein Hochschwenkteil (16) aufweist und dass der Füllstandsanzeiger (9) mit dem Hochschwenkteil (16) verbunden ist, wobei, bevorzugt, der Füllstandsanzeiger (9) relativ beweglich zu dem Hochschwenkteil (16) mit diesem verbunden ist.

4. Pflanzgefäß nach einem oder mehreren der vorstehenden Ansprüche oder insbesondere danach, **dadurch gekennzeichnet, dass** der Füllstandsanzeiger (9) mit dem Hochschwenkteil (16) in einer Richtung quer zu einer Schwenkachse des Hochschwenkteils (16) beweglich verbunden ist.

5. Pflanzgefäß nach einem oder mehreren der vorstehenden Ansprüche oder insbesondere danach, **dadurch gekennzeichnet, dass** der Füllstandsanzeiger (9) insgesamt relativ beweglich zu dem Hochschwenkteil (16) angeordnet ist.

6. Pflanzgefäß nach einem oder mehreren der vorstehenden Ansprüche oder insbesondere danach, **dadurch gekennzeichnet, dass** die Absenkung zufolge Schwerkraft erfolgt.

7. Pflanzgefäß nach einem oder mehreren der vorstehenden Ansprüche oder insbesondere danach, **dadurch gekennzeichnet, dass** das Hochschwenkteil (16) zugleich einen Einfüllbereich (19) bildet.

8. Pflanzgefäß nach einem oder mehreren der vorstehenden Ansprüche oder insbesondere danach, **dadurch gekennzeichnet, dass** der Füllstandsanzeiger (9) im aufgestellten Zustand im Inneren des Einfüllbereiches (19) angeordnet ist.

9. Pflanzgefäß nach einem oder mehreren der vorstehenden Ansprüche oder insbesondere danach, **dadurch gekennzeichnet, dass** der Füllstandsanzeiger (9) im nicht aufgestellten Zustand zumindest teilweise unterhalb einer Zwischenboden-Oberfläche (17) des Zwischenbodens (7) angeordnet ist.

10. Pflanzgefäß nach einem oder mehreren der vorstehenden Ansprüche oder insbesondere danach, **dadurch gekennzeichnet, dass** der Füllstandsanzeiger (9) in einer in dem Hochschwenkteil (16) und/oder dem Zwischenboden (7) ausgebildeten Aufnahme (8) einliegt.
